(19) Europäisches Patentamt
European Patent Office
Office européen des brevets

(11) **EP 4 593 007 A1**

(12) **EUROPEAN PATENT APPLICATION**
published in accordance with Art. 153(4) EPC

(43) Date of publication:
**30.07.2025 Bulletin 2025/31**

(21) Application number: **24825142.3**

(22) Date of filing: **04.06.2024**

(51) International Patent Classification (IPC):
**G10K 11/178** (2006.01)

(52) Cooperative Patent Classification (CPC):
**G10K 11/17823; G10K 11/17854; G10K 11/17881;**
G10K 2210/111; G10K 2210/112; Y02T 90/00

(86) International application number:
**PCT/CN2024/097165**

(87) International publication number:
**WO 2024/260246 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 CN 202310738452**

(71) Applicant: **Shanghai Soundsniper Ltd.**
**Shanghai 200331 (CN)**

(72) Inventor: **CHEN, Lijun**
**Shanghai 200331 (CN)**

(74) Representative: **Metida**
**Gyneju str. 16**
**01109 Vilnius (LT)**

(54) **ACTIVE NOISE REDUCTION SYSTEM**

(57) The present invention relates to noise reduction technology, in particular to an active noise reducing system, which includes a reference microphone arranged near a noise source, an error microphone arranged near a sound wave receiving end, a noise reducing speaker facing the sound wave receiving end, and a controller connected with the reference microphone, the error microphone and the noise reducing speaker by means of signals; the reference microphone uses a microphone array directed to a sound source, the controller uses a delay algorithm or an adaptive filtering algorithm to postpone microphone sampling points one by one, so that it is able to use a sound source in one direction or at one point to be referred as a sound source of a filtered object. In the present invention, using the delay algorithm, or the adaptive filtering algorithm makes it possible to postpone microphone sampling points one by one; thus, using a sound source in one direction or at one point to be referred as a sound source of a filtered object makes it possible to avoid a reference microphone from being interfered by a noise reducing speaker to a great extent, so as to make an open mode of active noise reduction possible.

FIG.2

**Description**

**FIELD OF THE INVENTION**

The present invention relates to noise reduction technology, in particular to an active noise reducing system and an active noise reducing system for vehicles.

**BACKGROUND OF THE INVENTION**

The active noise reduction is to filter out sound waves of a noise source by emitting reverse sound waves so as to eliminate the noise source. Currently, the active noise reduction is classified into an open mode and a non-open mode. The open mode of the active noise reduction is to shield a certain direction of sound radiation in a sound field, or to reduce noise in a small area in a sound field.

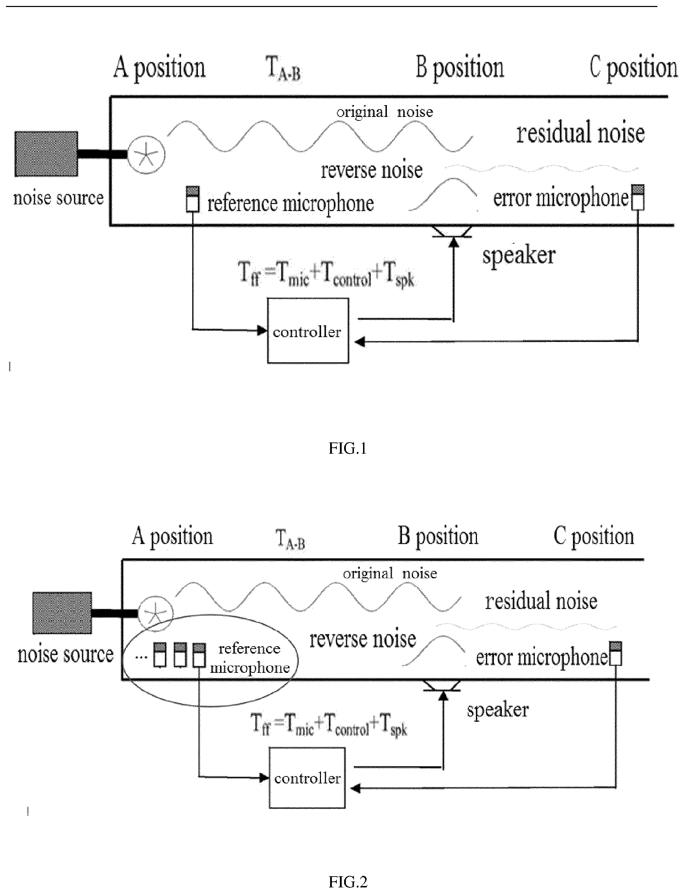

As shown in Fig. 1, the open mode of the active noise reduction of the prior art has a speaker acting as a carrier emitting reverse sound waves, but in the open mode of the active noise reduction, a reference microphone and an error microphone are both exposed to the same sound field, and there is no shield between each other, and emitted reverse sound waves will interfere with the reference microphone, then influence a controller to send incorrect commands, increasing the power of the speaker; in this way, a pernicious circle occurs and eventually leads to a microphone whine; therefore, the open mode of the active noise reduction is difficultly performed in this.

In addition, a RNC active noise reduction device on a vehicle generally uses a vibration sensor to sense sound, and then filters out airborne sound caused from body vibration by emitting reverse sound waves. However, the correlation between the body vibration and the airborne sound caused from the vibration is not strong, always resulting in unsatisfactory effects.

**SUMMARY OF THE INVENTION**

The technical problem to be solved by the present invention is to overcome the deficiencies of the prior art and achieve postponing microphone sampling points one by one, and making it possible to use a sound source in one direction or at one point to be referred as a sound source of a filtered object, and avoid a reference microphone from being interfered by a noise reducing speaker to a great extent, by way of providing an active noise reducing system and an active noise reducing system for vehicles.

In order to achieve the above purpose, we propose an active noise reducing system, which includes a reference microphone arranged near a noise source, an error microphone arranged near a sound wave receiving end, a noise reducing speaker facing the sound wave receiving end, and a controller connected with the reference microphone, the error microphone and the noise reducing speaker by means of signals, wherein the reference microphone uses a microphone array directed to a sound source, the controller uses a delay algorithm or an adaptive filtering algorithm to postpone microphone sampling points one by one, so that it is able to use a sound source in one direction or at one point to be referred as a sound source of a filtered object.

The present invention further provides the following preferred technical solutions.

1. A plurality of microphones is arranged in a transmission direction of a sound source in the microphone array, sending sound waves in an arrangement direction of the reference microphone, and a set distance is kept between each microphone, which receives audio signals that can maintain a certain phase difference.

2. The delay algorithm is executed as follows. After the reference microphone collects and converts AD signals, setting sampling points one by one, arranging a first microphone, a second microphone, a third microphone close and so on that are close to a noise source, and calculating a relation between the first microphone and the second microphone relative to the sound source through a cross-correlation function of signals to give a sampling point delays between the first microphone and the second microphone, in the same way, giving b sampling point delays between the third microphone and the first microphone, multiplying a voltage signal of the first microphone close to the sound source by a coefficient; postponing an audio signal of the second microphone by a sampling points, and multiplying a voltage signal of the second microphone by another coefficient; postponing an audio signal of the third microphone by b sampling points, and multiplying a voltage signal of the third microphone by yet another coefficient, and so on, and then superimposing the calculated audio signals.

3. The adaptive filtering algorithm is executed as follows: $e(n)=d(n)-y(n)$; $y(n)=b(n)*x(n)$; $b(n)=c*x(n)*e(n)$ $b(n-1)$, where $d(n)$ is an audio signal that reaches a sound source receiving point after a sound source is transmitted through the air, $x(n)$ is an audio signal obtained by a reference microphone array from a sound source, $e(n)$ is a residual value after active noise reduction, that is, an error microphone signal (the smaller the better), $y(n)$ is a reverse sound wave emitted by a speaker after calculation, $b(n)$ is a filter coefficient, $c$ is a filter coefficient calculation step length; thus, the above calculation gives an optimal noise reduction reverse sound wave.

We further propose an active noise reducing system for vehicles, which includes the aforementioned active noise reducing system, wherein a microphone array is arranged from bottom to up, a noise reducing speaker is arranged inside a headrest of a seat to emit reverse sound waves, which can make noise reduction radiation directly toward occupant's ears.

Compared with the prior art, the present invention has the following beneficial effects. The present invention uses the delay algorithm, or the adaptive filtering algorithm capable of postponing microphone sampling points one by one, and making it possible to use a sound source in one direction or at one point to be referred as a sound source of a filtered object, and avoid a reference microphone from being interfered by a noise reducing speaker to a great extent, so as to make an open mode of active noise reduction possible; the microphone can be arranged in three dimensions from a sound source to a receiver of the sound source, meeting noise reduction requirements in multiple scenarios.

## BRIEF DESCRIPTION OF THE DRAWINGS

Fig.1 is a structural diagram of the prior art.
Fig.2 is the structural diagram of the present invention.
Fig.3 is a schematic diagram of the delay algorithm of the present invention.
Fig.4 is a schematic diagram of the adaptive filtering algorithm of the present invention.

## DETAILED DESCRIPTION OF SOME EMBODIMENTS

We shall further explain the present invention in combination with the figures, and it is very clear for a person skilled in the art to understand the structure and principle of the present invention. It should be understood that the embodiments described herein are only used to explain the invention and not to pose any limitation on the present invention.

As shown in Fig.2, the present invention makes an improvement on the traditional active noise reducing system by changing the reference microphone to a microphone array directed to the sound source and uses the delay algorithm, or the adaptive filtering algorithm capable of postponing microphone sampling points one by one, and making it possible to use a sound source in one direction or at one point to be referred as a sound source of a filtered object, and avoid a reference microphone from being interfered by a noise reducing speaker to a great extent, so as to make an open mode of active noise reduction possible.

A plurality of microphones is arranged in a transmission direction of a sound source in the microphone array, sending sound waves in an arrangement direction of the reference microphone, and a set distance is kept between each microphone, which receives audio signals that can maintain a certain phase difference, making subsequent calculation convenient.

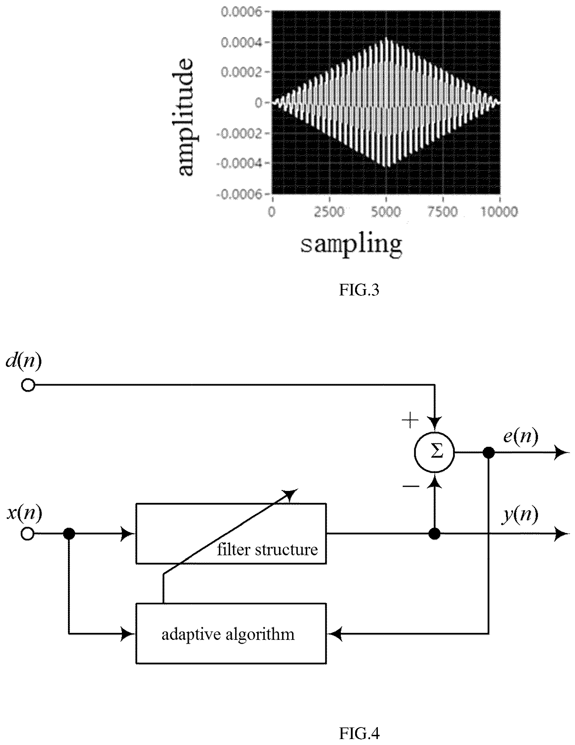

The delay algorithm is executed as follows. After the reference microphone collects and converts AD signals, setting sampling points one by one, as shown in Fig.2, arranging a first microphone, a second microphone, a third microphone close and so on that are close to a noise source. As shown in Fig.3, in practice, there are more microphones arranged in the sound field. Calculating a relation between the first microphone and the second microphone relative to the sound source through a cross-correlation function of signals to give a sampling point delays between the first microphone and the second microphone, in the same way, giving b sampling point delays between the third microphone and the first microphone.

Since Microphone 1 is closer to the sound source, we multiply its result by a coefficient 1.2 (which may be higher); since Microphone 3 is close to the noise reducing speaker, in order to further prevent interference, we multiply it by a coefficient 0.1 (it is possible to use the multiplied coefficient for adjustment in practice), and for Middle Microphone 2, we multiply it by a coefficient 0.8.

In the noise reduction process, the audio signals of the reference microphone are first collected, in the present invention, the audio microphone is composed of a microphone array, we multiply the voltage signal of the first microphone close to the sound source by a coefficient 1.2 (for example), postpone the audio signal of the second microphone by a sampling points, multiply the audio signal of the second microphone by a coefficient 0.8, postpone the audio signal of the third microphone by b sampling points, and multiply the audio signal of the third microphone by a coefficient 0.1, and then superimpose these three audio signals that have been calculated. In the superimposed audio signals, the audio transmitting from the sound source along the microphone is amplified and the audio transmitting in the opposite direction is shrunk, in this way, it is possible to achieve the open mode of active noise reduction by replacing the traditional reference microphone with this microphone array, and make it possible to minimize the interference of the emitted reverse sound waves to the reference microphone array, make the data collected by the microphone more intuitive and accurate than that obtained by a vibration sensor, and make true the open mode of active noise reduction.

The adaptive filtering algorithm is executed as follows:
As shown in Fig.4, $d(n)$ is an audio signal that reaches a sound source receiving point after a sound source is transmitted through the air, $x(n)$ is an audio signal obtained by a reference microphone array from a sound source, $e(n)$ is a residual value after active noise reduction, that is, an error microphone signal (the smaller the better), $y(n)$ is a reverse sound wave emitted by a speaker after calculation, $b(n)$ is a filter coefficient, $c$ is a filter coefficient calculation step length.

The calculation process is as follows:

$$e(n)=d(n)-y(n);$$

$$y(n)=b(n)*x(n);$$

$$b(n)=c*x(n)*e(n)+b(n-1);$$

Thus, the above calculation gives an optimal noise reduction reverse sound wave.

By way of using the above method of superposing sampling point coefficients, it is possible to make the delay more accurate, and by way of superimposing the calculated audio signals, it is possible to amplify the audio at the position of the sound source, and reduce the influence of the audio radiated by the noise reducing speaker. Its principle is similar to the delay algorithm, but the delay algorithm uses a sampling point delay; however, the delay in reality is certainly not an integer multiple of respective sampling points, so the adaptive filtering method is more accurate, of course, the hardware runs with a bigger load.

In the above method, one reference sound source is transmitted along a straight pipe; therefore, the reference microphones are arranged in a straight line, and in more application scenarios, a sound wave receiving end is human ears, and microphones should be arranged in three dimensions, from a sound source to a sound source receiver.

The present invention can be applied in vehicle noise reduction. The microphone array is arranged from bottom to up; because both engine noise and tire noise are transmitted from bottom to up, a noise reducing speaker is arranged inside a headrest of a seat to emit reverse sound waves, which can make noise reduction radiation directly toward occupant's ears. At present, systems in the market directly use a vehicle's own horn, which is set far away from occupant's ears and cannot raise noise reduction efficiency, and the effect of using vibration sensors is far less intuitive than that of directly collecting a sound field with a microphone array. Therefore, in the method for an intelligent headrest used herein, a built-in noise reducing speaker of the seat headrest emits reverse sound waves, and a microphone array is arranged along a seat from bottom to top; because tire noise and engine noise mainly transmit from bottom to top, this arrangement of microphones can make full use of the sound transmission direction. This system can not only be used in private cars, but also used in commercial vehicles such as container trucks, so as to reduce the fatigue of drivers.

This system can also be used for pipe noise reduction, run in air conditioning blowing ducts, and greatly reduce system noise for a fresh air system.

The aforementioned content is only one embodiment of the present invention, but does not pose a limitation on the protection scope of the present invention, equivalent replacement or change made by a person skilled in the art within the background disclosed in the present invention on the base of the idea of the present invention and utility model should fall within the protection scope of the present invention.

**Claims**

1. An active noise reducing system, comprising a reference microphone arranged near a noise source, an error microphone arranged near a sound wave receiving end, a noise reducing speaker facing the sound wave receiving end, and a controller connected with the reference microphone, the error microphone and the noise reducing speaker by means of signals,
wherein said reference microphone uses a microphone array directed to a sound source, said controller uses a delay algorithm or an adaptive filtering algorithm to postpone microphone sampling points one by one, so that it is able to use a sound source in one direction or at one point to be referred as a sound source of a filtered object.

2. The active noise reducing system according to claim 1, wherein a plurality of microphones is arranged in a transmission direction of a sound source in said microphone array, sending sound waves in an arrangement direction of said reference microphone, and a set distance is kept between each microphone, which receives audio signals that can maintain a certain phase difference.

3. The active noise reducing system according to claim 1, wherein said delay algorithm is executed as follows:
after said reference microphone collects and converts AD signals, setting sampling points one by one, arranging a first microphone, a second microphone, a third microphone close and so on that are close to a noise source, and calculating a relation between the first microphone and the second microphone relative to the sound source through a cross-correlation function of signals to give a sampling point delays between the first microphone and the second microphone, in the same way, giving b sampling point delays between the third microphone and the first microphone, multiplying a voltage signal of the first microphone close to the sound source by a coefficient; postponing an audio signal of the second microphone by a sampling points, and multiplying a voltage signal of the second microphone by another coefficient; postponing an audio signal of the third microphone by b sampling points, and multiplying a voltage signal of the third microphone by yet another coefficient, and so on, and then superimposing the calculated audio signals.

4. The active noise reducing system according to claim 1, wherein said adaptive filtering algorithm is executed as follows: e(n)=d(n)-y(n); y(n)=b(n)*x(n); b(n)=c*x(n)*e(n)b(n-1), where d(n) is an audio signal that reaches a sound source receiving point after a sound source is transmitted through the air, x(n) is an audio signal obtained by a reference microphone array from a sound source, e(n) is a residual value after active noise reduction, that is, an error microphone signal (the smaller the better), y(n) is a reverse sound wave emitted by a speaker after calculation, b(n) is a filter coefficient, c is a filter coefficient calculation step length; thus, the above calculation gives an optimal noise reduction reverse sound wave.

5. An active noise reducing system for vehicles, comprising the active noise reducing system claimed as any one of claims 1-4, wherein a microphone array is arranged from bottom to up, a noise reducing speaker is arranged inside a headrest of a seat to emit reverse sound waves, which can make noise reduction radiation directly toward occupant's ears.

A position     $T_{A\text{-}B}$     B position     C position

original noise

residual noise

reverse noise

reference microphone     error microphone

speaker

$T_{ff} = T_{mic} + T_{control} + T_{spk}$

noise source

controller

FIG.1

A position     $T_{A\text{-}B}$     B position     C position

original noise

residual noise

reverse noise

reference microphone     error microphone

speaker

$T_{ff} = T_{mic} + T_{control} + T_{spk}$

noise source

... reference microphone

controller

FIG.2

FIG.3

FIG.4

# INTERNATIONAL SEARCH REPORT

| International application No. |
|---|
| **PCT/CN2024/097165** |

| **A.** | **CLASSIFICATION OF SUBJECT MATTER** |
|---|---|

G10K11/178(2006.01)i

According to International Patent Classification (IPC) or to both national classification and IPC

| **B.** | **FIELDS SEARCHED** |
|---|---|

Minimum documentation searched (classification system followed by classification symbols)

IPC: G10K

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 降噪, 参考麦克风, 误差麦克风, 降噪扬声器, 延迟算法, 自适应滤波算法, 噪声源, 滤波对象声源, noise reduction, delay algorithm , adaptive filter algorithm, microphone, sound source, loudspeaker

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| PX | CN 116597805 A (SHANGHAI SHENGYIN TECHNOLOGY CO., LTD.) 15 August 2023 (2023-08-15) description, paragraphs [0006]-[0024] | | 1-5 |
| X | CN 112331226 A (JIANGSU TSING MICRO INTELLIGENT TECHNOLOGY CO., LTD.) 05 February 2021 (2021-02-05) description, paragraphs [0003]-[0117], and figures 1-3 | | 1-5 |
| X | CN 107248408 A (XING YOUSHENG) 13 October 2017 (2017-10-13) description, paragraphs [0005]-[0065] | | 1-5 |
| X | CN 113066469 A (COSONIC INTELLIGENT TECHNOLOGIES CO., LTD.) 02 July 2021 (2021-07-02) description, paragraphs [0006]-[0112] | | 1-5 |
| A | US 10789969 B1 (BEIJING XIAOMI MOBILE SOFTWARE CO., LTD.) 29 September 2020 (2020-09-29) entire document | | 1-5 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 August 2024** | **20 August 2024** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097165**

| Patent document cited in search report | | | Publication date (day/month/year) | Patent family member(s) | Publication date (day/month/year) |
|---|---|---|---|---|---|
| CN | 116597805 | A | 15 August 2023 | None | |
| CN | 112331226 | A | 05 February 2021 | None | |
| CN | 107248408 | A | 13 October 2017 | None | |
| CN | 113066469 | A | 02 July 2021 | None | |
| US | 10789969 | B1 | 29 September 2020 | None | |

Form PCT/ISA/210 (patent family annex) (July 2022)